# EUROPEAN PATENT APPLICATION

(11) **EP 4 375 118 A1**
(43) Date of publication of application: **29.05.2024**
(21) Application number: 23020514.8
(22) Date of filing: 21.11.2023
(51) Int. Cl.: B60L 15/02, B60L 3/12, B60L 15/20, H02P 6/10, H02P 21/05

(54) **A SYSTEM AND METHOD FOR REDUCING TORQUE RIPPLES IN ELECTRIC VEHICLES**

(30) Priority: 22.11.2022 IN 202241067143
(71) Applicant: TVS Motor Company Limited, 600006 Chennai (IN)
(72) Inventor: Thirunavukkarasu, Senthil, 600 006 Chennai, Tamil Nadu (IN); Balaji, Sreenivasan, 600 006 Chennai, Tamil Nadu (IN); Datta, Rajaram Sagare, 600 006 Chennai, Tamil Nadu (IN)
(74) Representative: Tobiasz-Dumania, Katarzyna

(57) **Abstract**

A System and Method for Reducing Torque Ripples in Electric Vehicles In an electric vehicle (10), the system includes a traction motor (250), a motor controller (200), a machine learning (SML) unit (320) and an excitation unit (340). The motor controller (200) is configured to determine a set of first rotor values (d1, q1) that includes a first magnetic flux value (id1) and a first rotor angle value (iq1). The machine learning unit (320) includes a ripple identification table (322) including a set of second rotor values for which torque ripple does not occur. The machine learning unit (320) is configured for predicting at least one time instant when a torque ripple will occur based upon a comparison between the set of first and second rotor values in the ripple identification table (322). The excitation unit (340) is configured for performing excitation at the at least one predicted time instant based upon a throttle demand and the comparison.

## Description

### FIELD OF THE INVENTION

The present invention relates to electric vehicles and more particularly to methods and systems for reducing torque ripples in such vehicles.

### BACKGROUND OF THE INVENTION

In electrically propelled vehicles, the traction motors create torque ripples at lower speed condition. There are many known causes of such ripples in torque such as cogging torque, airgap flux harmonics, mechanical imbalances and the like.

These torque ripples are undesirable and have certain adverse effects. For example, it makes the ride uncomfortable at lower speeds. Further, the torque ripple can cause speed ripple or excite driveline resonances. In the case of an electric or hybrid vehicle, this can result in vehicle oscillations which are a disturbance to the occupants.

It is known in the art to employ mechanical solutions to the design of the motor, such as the winding configuration, the geometry of the stator teeth, the geometry of the rotor barrier, the skew of the rotor and the like. However, these mechanical solutions are known to affect the engine torque density. Further, passive damping techniques, such as providing the vehicle with structural reinforcements or sound attenuating materials, can be used to reduce some of the adverse effects of torque ripple and mitigate acoustic noise. However, these vibration dampening methods may address the issue of ride comfort but are costly and do not directly address the problem of torque ripple produced by the motor.

Mechanical imbalances due to the aging of the electrical machines also causes torque ripple, which has not been addressed in the prior art. These imbalances happen over the entire lifecycle of the electric vehicle due to wear and tear of the mechanical parts and the like.

Thus, there is a need in the art for a system and method for reducing torque ripples in electric vehicles which addresses at least the aforementioned problems.

### SUMMARY OF THE INVENTION

In one aspect, the present invention is directed at a method for reducing torque ripples in an electric vehicle (EV). The electric vehicle has a traction motor for providing traction to at least one wheel of the electric vehicle. The method includes determining, continually after every rotation of the traction motor, a set of first rotor values (d1, q1), the set of first rotor values (d1, q1) including a first magnetic flux value (id1) and a first rotor angle value (iq1); predicting at least one time instant when a torque ripple will occur based upon a comparison between the set of first rotor values and a set of second rotor values in a ripple identification table, the ripple identification table including rotor values for which torque ripple does not occur; and performing excitation at the at least one predicted time instant, the excitation being performed based upon a throttle demand and the comparison.

In an embodiment, the method includes predicting an occurrence of torque ripple when, based upon the comparison, the first set of rotor values is not found in the ripple identification table; and predicting a non-occurrence of torque ripple when, based upon the comparison, the first set of rotor values is found in the ripple identification table. The step of the predicting is followed by calculating an error value, the error value is a difference between the set of first rotor values and the set of second rotor values chosen from the ripple identification table and being closest to first set of rotor values.

In an embodiment, the performing excitation includes providing a predetermined throttle assist value based upon the error value. The predetermined throttle assist values are calculated based upon experimentation so that the torque ripple is eliminated when the predetermined throttle assist value is provided. The predetermined throttle assist values are stored in a delta throttle assist table.

In an embodiment, the providing the throttle assist is followed by updating the ripple identification table by adding the new set of rotor values to the ripple identification table determined post rotation of the traction motor after providing the throttle assist.

In various embodiments, determining of the set of first rotor values (d1, q1) is performed using a Field Oriented Control (FOC) algorithm.

In another aspect, the present invention is directed at a system for reducing torque ripples in an electric vehicle The electric vehicle has a traction motor for providing traction to at least one wheel of the electric vehicle The system includes a motor controller a machine learning (SML) unit and an excitation unit. The motor controller is configured to generate a rotating magnetic field for the traction motor and determine, continually after every rotation of the traction motor a set of first rotor values (d1, q1). The set of first rotor values (d1, q1) include a first magnetic flux value (id1) and a first rotor angle value (iq1). The machine learning (SML) unit includes a ripple identification table including a set of second rotor values for which torque ripple does not occur. The machine learning unit is configured for predicting at least one time instant when a torque ripple will occur based upon a comparison between the set of first rotor values (d1, q1) and the set of second rotor values in the ripple identification table. The excitation unit is configured for performing excitation at the at least one predicted time instant based upon a throttle demand and the comparison.

In an embodiment, the machine learning unit is configured for predicting an occurrence of torque ripple when, based upon the comparison, the first set of rotor values is not found in the ripple identification table; and predicting a non-occurrence of torque ripple when, based upon the comparison, the first set of rotor values is found in the ripple identification table.

In an embodiment, the machine learning unit includes an error calculating unit configured for calculating an error value being a difference between the set of first rotor values and the set of second rotor values being rotor values chosen from the ripple identification table and being closest to first set of rotor values; and a storing unit configured for storing the respective error values in the SML unit.

In an embodiment, the excitation unit is configured for providing excitation in the form of a predetermined throttle assist value based upon the error value at the at least one predicted time instant, and the excitation is performed based upon a throttle demand and the error value.

In an embodiment, the machine learning unit includes an updating unit for updating the ripple identification table by adding the new set of rotor values to the ripple identification table determined post rotation of the traction motor after providing the throttle assist.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figures 1A, 1B, and 1C illustrate a method for reducing torque ripples in an Electric Vehicle (EV) in accordance with an embodiment of the invention.
Figure 2 illustrates implementation of a Field Operation Control loop in a Motor Controller, in accordance with an embodiment of the present invention.
Figure 3 illustrates a system for reducing torque ripples in an electric vehicle, in accordance with an embodiment of the invention.

### DETAILED DESCRIPTION OF THE INVENTION

The present invention relates to electric vehicles. More particularly, the present invention relates to torque management in such electric vehicles.

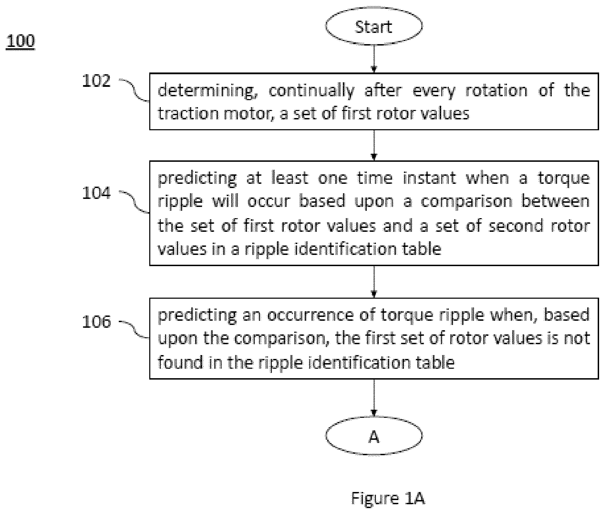

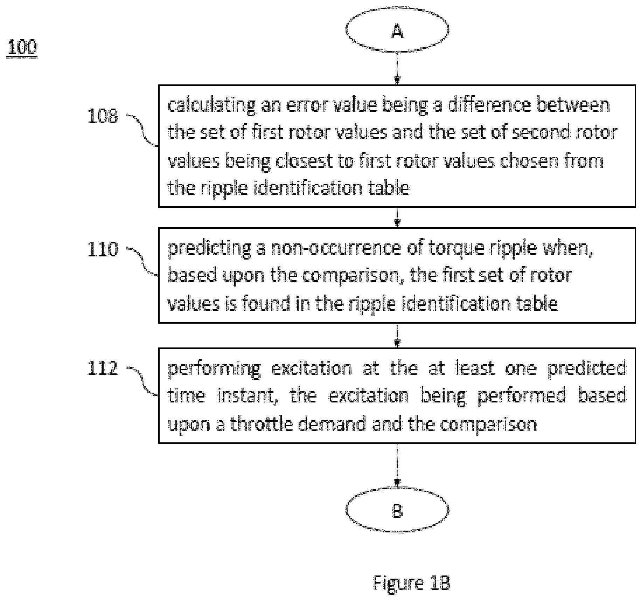

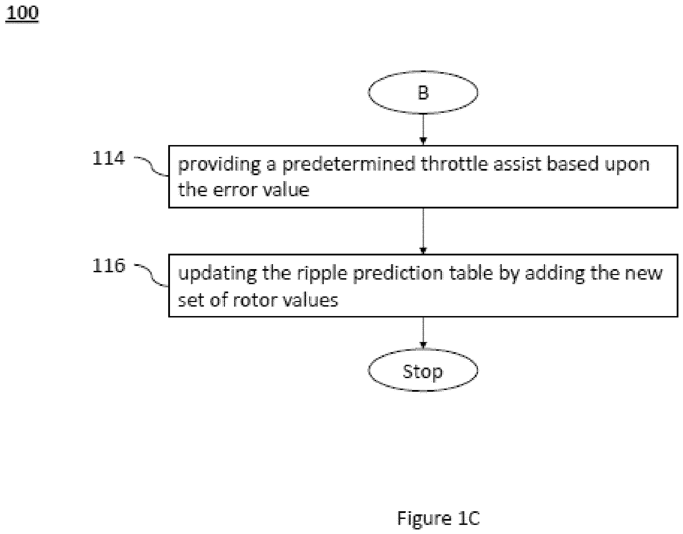

Figures 1A, 1B, 1C are flowcharts illustrating a method (100) for reducing torque ripples in an electric vehicle (EV) (10) in accordance with an embodiment of the invention. The electric vehicle (10) has a traction motor (250) for providing traction to at least one wheel of the electric vehicle (10). As an example, the traction motor (250) is a 3phase PMSM / BLDC based setup, which requires RMF (Rotating Magnetic Field) to operate in forward and reverse directions.

As illustrated, the method (100) comprises the step of determining (102), by a motor controller (200), a set of first rotor values (d1, q1). The set of first of rotor values (d1, q1) are determined continually after every rotation of the traction motor (250). In that, 'd' refers to magnetic flux and `q' refers to rotor angle value. Herein, the set of first rotor values (d1, q1) include a first magnetic flux value (id1) and a first rotor angle value (iq1).

Thereafter, the method (100) has the step of predicting (104), by a machine learning unit (320), at least one time instant when a torque ripple will occur. The prediction is based upon a comparison between the set of first rotor values (d1, q1) and a set of second rotor values in a ripple identification table (322). In that, the ripple identification table (322) includes rotor values for which torque ripple does not occur. Thereafter, the method (100) has the step of performing (112), by an excitation unit (340), excitation at the at least one predicted time instant. In that, the excitation is performed based upon a throttle demand and the comparison of the set of first rotor values (d1, q1) with the set of second rotor values in the ripple identification table (322).

Example of the ripple identification table (322):
Id, Iq values for which ripple does not occur:

| Id (A) | Iq (A) |
|---|---|
| 5.2 | 5 |
| 20 | 16.2 |
| 5.1 | 5 |
| 4.8 | 5 |
| 15.2 | 16 |
| 14 | 20 |
| 12 | 22 |

Herein Id refers to direct axis that control torque, and Iq refers to quadratic axis which control speed.

As further illustrated in Figure 1A, in an embodiment, the method (100) has the step of predicting (106), by the machine learning unit (220), an occurrence of torque ripple. The occurrence of the torque ripple is predicted when, on comparison of the set of first rotor values (d1, q1) with the ripple identification table (322), the set of first rotor values are not found in the ripple identification table (322). Similarly, as shown in Figure 1B, the method (100) has the step of predicting (110), by the machine learning unit (320), a non-occurrence of torque ripple. The non-occurrence of the torque ripple is predicted when, on comparison of the set of first rotor values (d1, q1) with the ripple identification table (322), the set of first rotor values are found in the ripple identification table (322). The step of the predicting (106) is followed by calculating (108), by an error calculation unit (324) of the machine learning unit (320), an error value. The error value is a difference between the set of first rotor values and the set of second rotor values chosen from the ripple identification table (322) and being closest to set of first rotor values.

For example, if the first set of rotor values are (5, 4.9), which is not found in the ripple identification table (322), a set of values is chosen, i.e., (5.2, 5) from the ripple identification table (322) and error values are calculated based upon the difference. Herein, error values are (0.2, 0.1).

In an embodiment, the step of performing (112) excitation further comprises providing (114), by the excitation unit (240), a predetermined throttle assist value based upon the error value. The predetermined throttle assist values are calculated based upon experimentation so that the torque ripple is eliminated when the predetermined throttle assist value is provided. The predetermined throttle assist values are stored in a delta throttle assist table.

Example of delta throttle assist table:
Delta throttle assist table having throttle assist values corresponding to error values:

| Error values | Throttle assist value (km/hr) |
|---|---|
| (0.1, 0.1) | 20 |
| (0.2, 0.1) | 22 |
| (0.2, 0.2) | 24 |

Here, in the example, since the error value is (0.2, 0.1), the corresponding throttle assist value is 22. It is to be noted that the predetermined throttle assist value may be a positive value or a negative value based on the corresponding error values.

In an embodiment, the step of providing (114) the throttle assist is followed by updating (116), by an updating unit (228) of the machine learning unit (220), the ripple identification table (322) by adding the new set of rotor values to the ripple identification table (322) determined post rotation of the traction motor (250) after providing the throttle assist.

In various embodiments, determining (102) of the set of first rotor values (d1, q1) is performed using a Field Oriented Control (FOC) algorithm.

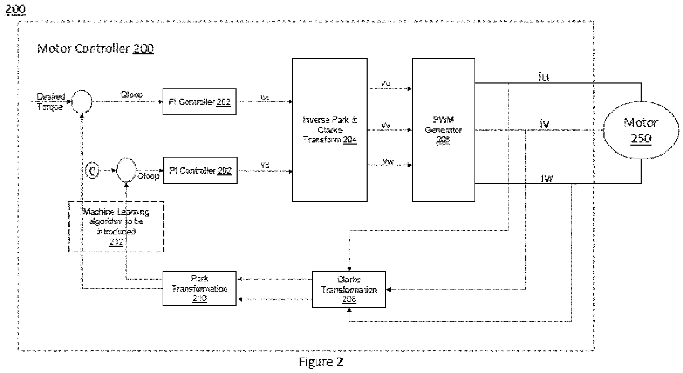

As illustrated in Figure 2, the FOC (Field Oriented Control) loop is implemented in software of the Motor Controller 200 or Power Electronic ECU. In FOC 2-dimensional parameters magnetic flux 'd' and rotor angle `q' from PI Controllers (202) is converted into 3-dimensional parameters using Inverse Clarke & Park transformation (204) later into 3 phase currents u, v, w though a Pulse Width Modulation (PWM) Generator (206). After the motor (250) is rotated once for the next rotation, flux and the current rotor angle is fed back after Clarke (208) and Park transformation (210) again to the PI derivatives. Before the 'd' 'q' coordinates are fed back to PI derivatives, In the FOC loop, In the feedback of `d' & 'q' a machine learning technique - Logistic Regression (212) is introduced such that error's detected in the magnetic flux and the rotor angle is learnt and eliminated cycle by cycle and accordingly fed to Inverse Clarke & Park conversion (208, 210) such that PWM pulses generated is used for switching the IGBT's. Id, Iq mapping will be compared in Logistic Regression (212) or any SML (Supervised Machine learning) models and a suitable value will be retrieved and fed back to the system (300) to reduce / eliminate the torque ripples.

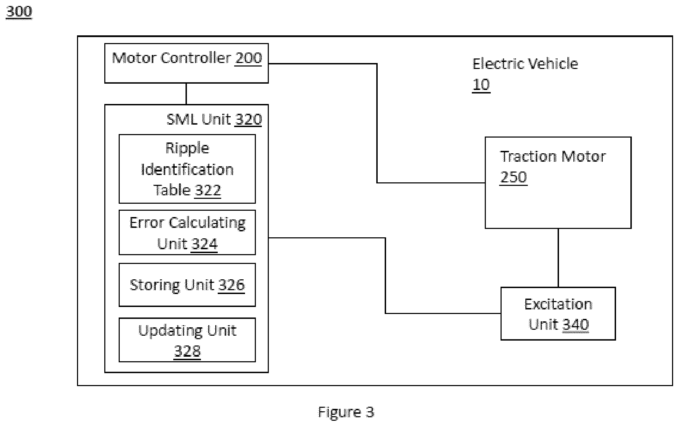

Figure 3 illustrates a system 300 for reducing torque ripples in an electric vehicle (10), in accordance with an embodiment of the invention. In accordance with an embodiment, the electric vehicle (10) has a traction motor (250) for providing traction to at least one wheel of the electric vehicle (10). The system (300) comprises a motor controller (200), a machine learning (SML) unit (320), and an excitation unit (340). The RMF generation will take place at the motor controller (200), this motor controller can work with different operating strategies like FOC, current controlled. The FOC based control is popular due to their efficiency and response.

In an embodiment, the system (300) comprises the motor controller (200). The motor controller (200) is not a general-purpose computer unit. The motor controller (200) may include suitable logic, circuitry, interfaces and/or codes that may be configured to generate a rotating magnetic field for the traction motor (250); and determine, continually after every rotation of the traction motor (250), a set of first rotor values (d1, q1). The set of first rotor values (d1, q1) includes a first magnetic flux value (d1) and a first rotor angle value (q1). Further, system (300) comprises the machine learning unit (320). The machine learning unit (320) is not a general-purpose computer unit and may include suitable logic, circuitry, interfaces and/or codes that may function as follows. The machine learning unit (320) functions on a Supervised Machine Learning (SML) Model for estimating and predicting the torque ripples. The SML model is capable of functioning on any one of, but not limited to the following techniques: Logistic Regression, Decision tree, Random forest, Naive Bayes, KNN, or XG Boost. The machine learning unit (320) comprises a ripple identification table (322) including a set of second rotor values for which torque ripple does not occur. The machine learning unit (320) is configured for predicting at least one time instant when a torque ripple will occur based upon a comparison between the set of first rotor values (d1, q1) and the set of second rotor values in the ripple identification table (322). The excitation unit (340) is configured for performing excitation at the at least one predicted time instant based upon a throttle demand and the comparison.

In an embodiment, the machine learning unit (320) is configured for predicting an occurrence of torque ripple when, based upon the comparison, the first set of rotor values (d1, q1) is not found in the ripple identification table (322). In an embodiment, the machine learning unit (320) is further configured for predicting a non-occurrence of torque ripple when, based upon the comparison, the first set of rotor values (d1, q1) is found in the ripple identification table (322).

In an embodiment, the machine learning unit (320) comprises an error calculating unit (324) configured for calculating an error value being a difference between the set of first rotor values (d1, q1) and the set of second rotor values being rotor values chosen from the ripple identification table (322) and being closest to first set of rotor values. The machine learning unit (320) further comprises a storing unit (326) and the storing unit (326) is configured for storing the respective error values in the machine learning (SML) unit (320).

In an embodiment, the excitation unit (340) is configured for providing excitation in the form of a predetermined throttle assist value based upon the error value at the at least one predicted time instant, and the excitation is performed based upon a throttle demand and the error value.

In an embodiment, the machine learning unit (320) comprises an updating unit (328) for updating the ripple identification table (322) by adding the new set of rotor values to the ripple identification table (322) determined post rotation of the traction motor (250) after providing the throttle assist.

Advantageously, the method and system of the invention reduces torque ripple in electric vehicle. Deploying the SML models after the Id, Iq values generated from the controller will allow SML to optimize the torque ripples by means differentiate whether ripple can be felt by the customer or not if so, change optimize the excitation if not so continue the same. This is dynamic way of reducing the torque ripples. This makes the ride more comfortable.

Further, the present system and method allows for reduction in torque ripples which result in improved performance of the traction motor of the Electric Vehicle. Further, the present invention allows for a robust technique which is capable of being fit on to or used for any vehicle with a Field Oriented Control Loop. Reduction in torque ripples further leads to improvement in handling of the vehicle, and thus comfort for the rider.

In addition, as opposed to conventional systems, in the present invention, due to the excitation at the predicted time instant and error calculation, in the feedback of 'd' & 'q' a machine learning algorithm is introduced such that error's detected in the magnetic flux and the rotor angle is learnt and eliminated cycle by cycle and accordingly fed to Inverse Clarke & Park conversion such that PWM pulses generated is used for controlling the motor. Id, Iq mapping is compared in SML models and a suitable values are retrieved and fed back to the system to reduce / eliminate the torque ripples. By implementing the Logistic Regression or any other Supervised Machine Learning algorithm before the actual Id, Iq calculation in FOC. Errors in the feedback of flux 'd' and rotor angle `q' can be eliminated. Furthermore, in the present invention, since the predetermined throttle assist values are calculated based upon experimentation, the torque ripple is eliminated when the predetermined throttle assist value is provided. Therefore, torque ripple caused by mechanical imbalances due to the aging of the electrical machines is also addressed and avoided.

In light of the abovementioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

While the present invention has been described with respect to certain embodiments, it will be apparent to those skilled in the art that various changes and modification may be made without departing from the scope of the invention as defined in the following claims.

### List of Reference Numerals:

10: Electric Vehicle
100: Method
200: Motor Controller
202: PI Controller
204: Inverse Clarke & Park Transform
206: PWM Generator
208: Clarke Transform
210: Park Transform
212: Logistic Regression
250: Traction Motor
300: System
320: Machine Learning (SML) unit
322: Ripple identification table
324: Error calculating unit
326: Storing unit
328: Updating unit
340: Excitation unit

## Claims

1. A method (100) for reducing torque ripples in an electric vehicle (EV) (10), the electric vehicle (10) having a traction motor (250) for providing traction to at least one wheel of the electric vehicle (10), the method (100) comprising:
determining (102), by a motor controller (200), continually after every rotation of the traction motor (250), a set of first rotor values (d1, q1), the set of first rotor values (d1, q1) including a first magnetic flux value (id1) and a first rotor angle value (iq1);
predicting (104), by a machine learning unit (320), at least one time instant when a torque ripple will occur based upon a comparison between the set of first rotor values (d1, q1) and a set of second rotor values in a ripple identification table (322), the ripple identification table (322) including rotor values for which torque ripple does not occur; and
performing (112), by an excitation unit (340), excitation at the at least one predicted time instant, the excitation being performed based upon a throttle demand and the comparison.

2. The method (100) for reducing torque ripples in the electric vehicle (10) as claimed in claim 1, wherein the predicting (104) comprises:
predicting (106), by the machine learning unit (320), an occurrence of torque ripple when, based upon the comparison, the first set of rotor values (d1, q1) is not found in the ripple identification table (322); and
predicting (110), by the machine learning unit (220), a non-occurrence of torque ripple when, based upon the comparison, the first set of rotor values (d1, q1) is found in the ripple identification table (322).

3. The method (100) for reducing torque ripples in the electric vehicle (10) as claimed in claim 1, wherein the predicting (106) is followed by steps of:
calculating (108), by an error calculating unit (324) of the machine learning unit (320), an error value, the error value being a difference between the set of first rotor values (d1, q1) and the set of second rotor values, the set of second rotor values being rotor values chosen from the ripple identification table (322) and being closest to the set of first rotor values (d1, q1).

4. The method (100) for reducing torque ripples in the electric vehicle (10) as claimed in claim 3, wherein the performing (112) excitation comprises:
providing (114), by the excitation unit (340), a predetermined throttle assist value based upon the error value.

5. The method (100) for reducing torque ripples in the electric vehicle (10) as claimed in claim 4, wherein the predetermined throttle assist values are calculated based upon experimentation so that the torque ripple is eliminated when the predetermined throttle assist value is provided, the predetermined throttle assist values being stored in a delta throttle assist table.

6. The method (100) for reducing torque ripples in the electric vehicle (10) as claimed in claim 4, wherein the providing the throttle assist value is followed by steps of:
updating (116), by an updating unit (328) of the machine learning unit (320), the ripple identification table (322) by adding a new set of rotor values to the ripple identification table (322) determined post rotation of the traction motor (250) after providing the throttle assist value.

7. The method (100) for reducing torque ripples in the electric vehicle (10) as claimed in claim 1, wherein determining (102) of the set of first rotor values (d1, q1) is performed using a Field Oriented Control (FOC) technique.

8. A system (300) for reducing torque ripples in an electric vehicle (10), the electric vehicle (10) having a traction motor (250) for providing traction to at least one wheel of the electric vehicle (10), the system (300) comprising:
a motor controller (200), the motor controller (200) being configured to:
generate a rotating magnetic field for the traction motor (250); and
determine, continually after every rotation of the traction motor (250), a set of first rotor values (d1, q1), the set of first rotor values (d1, q1) including a first magnetic flux value (id1) and a first rotor angle value (iq1);
a machine learning (SML) unit (320) comprising a ripple identification table (322), the ripple identification table (322) including a set of second rotor values for which torque ripple does not occur, the machine learning unit (320) being configured for predicting at least one time instant when a torque ripple will occur based upon a comparison between the set of first rotor values (d1, q1) and the set of second rotor values in the ripple identification table (322); and
an excitation unit (340), the excitation unit (340) being configured for performing (112) excitation at the at least one predicted time instant, the excitation being performed based upon a throttle demand and the comparison.

9. The system (300) for reducing torque ripples in the electric vehicle (10) as claimed in claim 8, wherein the machine learning unit (320) is configured for predicting an occurrence of torque ripple when, based upon the comparison, the first set of rotor values (d1, q1) is not found in the ripple identification table (322); and predicting a non-occurrence of torque ripple when, based upon the comparison, the first set of rotor values (d1, q1) is found in the ripple identification table (322).

10. The system (300) for reducing torque ripples in the electric vehicle (10) as claimed in claim 9, wherein the machine learning unit (320) comprises:
an error calculating unit (324), the error calculating unit (324) being configured for calculating an error value, the error value being a difference between the set of first rotor values (d1, q1) and the set of second rotor values, the second rotor values being rotor values chosen from the ripple identification table (322) and being closest to the first set of rotor values (d1, q1); and
a storing unit (326), the storing unit (326) being configured for storing the respective error values in the SML unit (320).

11. The system (300) for reducing torque ripples in the electric vehicle (10) as claimed in claim 10, wherein the excitation unit (340) is configured for providing excitation in the form of a predetermined throttle assist value based upon the error value at the at least one predicted time instant, the excitation being performed based upon a throttle demand and the error value.

12. The system (300) for reducing torque ripples in an electric vehicle (10) as claimed in claim 11, wherein the machine learning unit (320) comprises:
an updating unit (328), the updating unit (328) being configured for updating the ripple identification table (322) by adding a new set of rotor values to the ripple identification table (322) determined post rotation of the traction motor (250) after providing the throttle assist value.
